# EUROPEAN PATENT APPLICATION

(11) **EP 3 804 488 A1**
(43) Date of publication of application: **14.04.2021**
(21) Application number: 19201959.4
(22) Date of filing: 08.10.2019
(51) Int. Cl.: A01B 79/00, A01M 7/00, G01N 21/84, G06K 9/00, G06K 9/20, G06K 9/62

(54) **APPARATUS FOR PLANT DISEASE AND PEST DETECTION**

(71) Applicant: Bayer AG, 51373 Leverkusen (DE)
(72) Inventor: SIRVEN, Catherine, 69263 Lyon (FR); DESCROIX, Laurent, 69263 Lyon (FR); VOGLER, Steffen, 13353 Berlin (DE); MANESSO, Erica, 65926 Frankfurt am Main (DE)
(74) Representative: BIP Patents

(57) **Abstract**

The present invention relates to an apparatus for plant disease and/or pest detection, a system for plant disease and/or pest detection, and a method for plant disease and/or pest detection, as well as to a computer program element and a computer readable medium.

## Description

### FIELD OF THE INVENTION

The present invention relates to an apparatus for plant disease and/or pest detection, a system for plant disease and/or pest detection, and a method for plant disease and/or pest detection, as well as to a computer program element and a computer readable medium.

### BACKGROUND OF THE INVENTION

The general background of this invention is the detection of plant diseases and pests in the laboratory and/or on the agricultural field. Visual disease and pest assessment of plants is usually based on disease and pest detection on plant leaves. Image based analysis of diseases and pests on a plant leaf generally requires plant leaf images in-plane to the surface of the plant leaf. However, usually this needs undesired manual handling of the plants under investigation. If plants are not manually prepared for photography usually images are acquired from locations and orientations relative to the plant leaves that are not considered to be useful for a visual assessment of a plant disease and pest infection.

### SUMMARY OF THE INVENTION

It would be advantageous to have improved means for the plant disease and pest detection.

The object of the present invention is solved with the subject matter of the independent claims, wherein further embodiments are incorporated in the dependent claims. It should be noted that the following described aspects and examples of the invention apply also for an apparatus for plant disease and/or pest detection, a system for plant disease and/or pest detection, and a method for plant disease and/or pest detection, as well as to a computer program element and a computer readable medium.

According to a first aspect, there is provided an apparatus for plant disease and/or pest detection, comprising:
- an input unit, and
- a processing unit.
The input unit is configured to provide the processing unit with a plurality of images of a plant, wherein each image from the plurality of images of the plant was acquired from a different location and orientation relative to the plant. The processing unit is configured to implement an image-based machine-learning algorithm to detect a disease and/or a pest on the plant and
the processing unit utilizes the plurality of images to detect a disease and/or a pest on the plant with the image-based machine-learning algorithm.

In other words, imagery of a plant can be acquired independent of the location and orientation relative to the plant leaves and can be used for plant disease and/or pest detection.

Therefore, images that are normally considered as to be not useful for the assessment of a plant disease and/or pest infection turn out to be valuable when taken in combination with other images, each acquired from a different location and orientation relative to the plant.

In this way, also quantification of a plant disease and/or pest on a plant can be performed with a machine-learning algorithm which surprisingly leads also to similar results as those achieved with laborious human visual assessment of a disease and/or pest on the plant.

To put this in another way, manual handling of plants for photography can be avoided and the process of disease and/or pest detection and quantification can be fully automatized and expedited.

In an example, the input unit is configured to provide the processing unit with a plurality of images of the plant which were acquired from a side position preferably around the plant and wherein preferably at least one image was acquired from a position above the plant and preferably substantially parallel to the surface of the ground.

In this way, it is ensured that images from various locations and orientations relative to the plant are acquired that cover the canopy of the plant.

In an example, the input unit is configured to provide the processing unit with at least three images of the plant which were acquired from a side position preferably around the plant and which were acquired preferably in a substantially equal distance from each other.

In this context, the plurality of images provided to the processing unit represent a minimal amount of image information necessary for a kind of object panorama or inverse panorama of the plant under investigation. For this, preferably three 2D images from a side position and one 2D image from a zenithal position relative to the plant are acquired.

In a further example, the input unit is configured to provide the processing unit with images of the plant from the side position of the plant which were acquired substantially circularly around the plant.

In an example, the plurality of images were acquired in a substantially equal distance from the plant.

In this way, it is ensured that the data of the plurality of images are easy comparable e.g. as concerns the proportions of the plant elements depicted on the images.

In a further example, the apparatus for plant disease and/or pest detection further comprises:
- an output unit,
wherein the output unit is configured to output information about the plant disease and/or pest status of the plant investigated.

In other words, the outcome of the disease and/or pest detection analysis of the machine-learning algorithm is e.g. shown to a user e.g. with a monitor.

According to a second aspect, there is provided a system for plant disease and/or pest detection, comprising:
- a camera unit,
- an apparatus for plant disease and/or pest detection according to the first aspect and any of the associated examples.
The camera unit comprises at least one camera and the camera unit is configured to acquire the plurality of images of the plant.

In other words, at least one camera is required to acquire a plurality of images of the plant each from a different location and orientation relative to the plant. However, the camera unit can also comprise more than one camera: In this case, the information of the various images acquired from different cameras are forwarded to the input unit respectively the processing unit via wireline or wireless links.

In an example, the system for plant disease and/or pest detection further comprises a frame configured to hold the camera unit, wherein the camera unit comprises at least four cameras and wherein at least three cameras are arranged on the frame relative to the plant at a side position around the plant and at least one camera is arranged on the frame above the plant and preferably substantially parallel to the surface of the ground.

In this way, a plurality of images from different locations and orientations relative to the plant can be acquired all at the same time under the same conditions. Therefore, no spatial (respectively other) changes of the plant e.g. due to changing environmental conditions e.g. light intensity, wind etc. occur due to a potential time delay between the acquisition of the different images of the plant when e.g. only one camera is used.

In an example, at least one camera of the camera unit at the side position around the plant is configured to rotate by at least one angle of rotation with respect to a horizontal axis, wherein the horizontal axis extends in a tangential direction relative to the plant and wherein the horizontal axis further extends substantially parallel to the surface of the ground.

Depending on the expected plant height and architecture its can be advantageous to rotate the cameras on the side position around the plant with respect to a horizontal axis to optimize the camera view on the plant canopy.

In another example, the system for plant disease and/or pest detection further comprises
- at least one actuator configured to move the at least one camera of the camera unit. The at least one camera of the camera unit is configured to acquire an image of a plant at a first location and orientation relative to the plant. The input unit is configured to provide the processing unit with the image acquired by the camera unit from the first location and orientation relative to the plant. The processing unit is configured to determine another location and orientation relative to the plant suitable for taking another image of the plant to detect a plant disease and/or pest comprising utilization of the image content and spatial position information of the image from the first location and orientation relative to the plant. The processing unit is configured to control the at least one actuator to move the at least one camera of the camera unit to the new location and orientation relative to the plant as determined by the processing unit. Then, the at least one camera of the camera unit is configured to acquire an image of the plant from the new location and orientation relative to the plant as determined by the processing unit.

In other words, the camera unit comprises a camera that takes a first image of the plant at a certain known position. Depending on the analysis of the content of the image by the processing unit the actuator of the camera moves the camera to another spatial position where an image can be acquired that confirms the findings of the first image or contributes to even more information on the plant disease and/or pest as the image acquired first. E.g. if the analysis of the first image indicates a wrong angle to a leaf that shows first signs of a disease and/or pest the camera is moved to a position where the angle to the leaf is more optimal. Other examples include a leaf overlap detected in the first image where the camera is moved to a second position to detect the plant disease and/or pest on the leaf that was covered by the leaf as identified on the first image. Or light reflection identified on the first image which interfere with the disease and/or pest detection and movement of the camera to a second position as analyzed by the processing unit in order to reduce the light reflection.

In an example, the system for plant disease and/or pest detection further comprises:
- an output unit; and
- a spray gun configured to spray a fungicide (for plant diseases) and/or an insecticide (for pests);
The processing unit is configured to determine if the plant is to be sprayed with a fungicide and/or an insecticide or is not to be sprayed with a fungicide and/or an insecticide based on the information relating to the plant. If the determination is made that the plant is to be sprayed with the fungicide and/or insecticide, the output unit is configured to output information useable to activate at least one spray gun.

Thus, the outcome of the analysis of the plant disease and/or pest detection (and quantification) with the plurality of images acquired can be used to take measures to control the disease and/or pest on the plant. Depending on the plant and the plant disease and/or pest as well as the severity and level of disease and/or pest infection and the condition of the plant a threshold can be defined whether spraying is advisable or not. In the same context, also the dosing of the spray application can be matched to the outcome of the analysis of the processing unit.

In an example, the system for plant disease and/or pest detection further comprises
- at least one actuator configured to move the at least one a spray gun,
The processing unit is configured to determine a location and orientation relative to the plant suitable for activating the at least one spray gun comprising utilization of the image content and spatial position information of the plurality of images of the plant. The processing unit is configured to control the at least one actuator to move the at least one spray gun to the location and orientation relative to the plant as determined by the processing unit. The output unit is configured to output information useable to activate at least one spray gun at the location and orientation relative to the plant as determined by the processing unit based on the analysis of the of the image content and spatial position information of the plurality of images of the plant.

Thus, an optimal position for spraying relative to the plant can be calculated taking into account various information about the disease and/or pest and plant such as the type of the disease, type of pest, the severity and level of the disease/pest infection, the plant, the health status of the plant, the distribution of the disease and/or pest infection on the plant etc. Also, additional information such as environmental conditions e.g. precipitation, wind etc. can be taken into consideration for the analysis.

In other words, spraying can be applied on those diseases and/or pests that need to be treated. In addition, spraying can be focused on those parts of the plant which need to be sprayed and healthy parts of the plant are not sprayed if the outcome of the analysis determines that this is not necessary. This contributes in reducing the overall chemical use. It is also addressed that issues such as drift etc. can be reduced by such means.

According to a third aspect, there is provided a method for plant disease and/or pest detection, comprising
(a) providing a processing unit with a plurality of images of a plant; wherein each image from the plurality of images of the plant was acquired from a different location and orientation relative to the plant;
(b) implementing by the processing unit an image-based machine-learning algorithm to detect a disease and/or pest on the plant;
(c) utilizing by the processing unit the plurality of images to detect a disease and/or pest on the plant with the image-based machine-learning algorithm.

According to another aspect, there is provided a computer program element for controlling the apparatus of the first aspect, and/or the system according to the second aspect, which when executed by a processor is configured to carry out the method of the third aspect.

According to another aspect, there is provided a computer readable medium having stored the computer program element.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic set up of an example of an apparatus for plant disease and/or pest detection;
Fig. 2 shows a schematic set up of an example of a system for plant disease and/or pest detection;
Fig. 3 shows a method for plant disease and/or pest detection;
Fig. 4 shows a schematic representation of a system for plant disease and/or pest detection from a side view perspective;
Fig. 5 shows another schematic representation of a system for plant disease and/or pest detection with two cameras from a side view perspective, and
Fig. 6 shows a schematic representation of a system with four cameras from a side view perspective.
Fig. 7 shows a system with four cameras of Fig. 6 from a top view perspective.
Fig. 8 shows a comparison of a plant disease assessment between a visual assessment by an expert in comparison to an assessment with the herein described apparatus and system.
Fig. 9 shows results of a comparison of an analysis between the plant disease detection on flat leaves and of images takes from a side view relative to the plant in the form of a receiver operating characteristic curve (ROC curve).

### DETAILED DESCRIPTION OF EMBODIMENTS

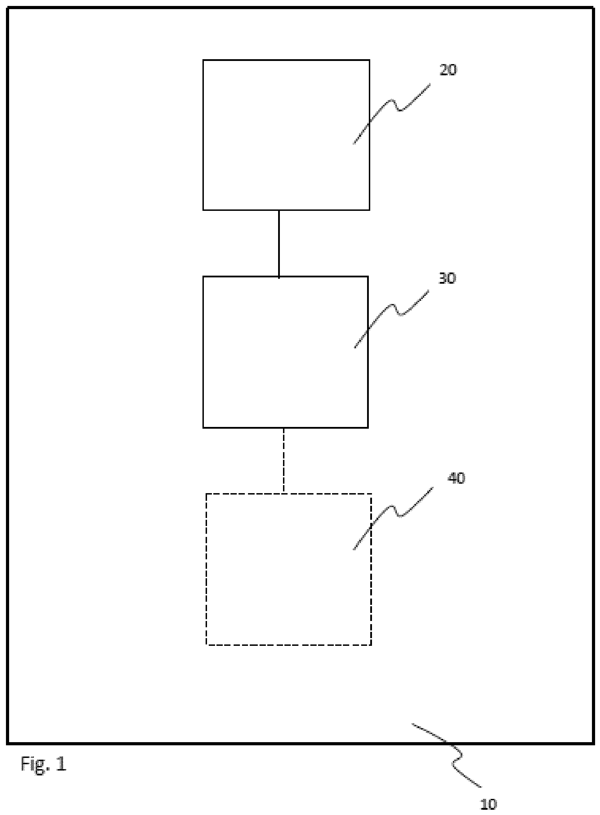

Fig. 1 shows an example of an apparatus 10 for plant disease and/or pest detection. The apparatus 10 has an input unit 20 and a processing unit 30. The input unit 20 is configured to provide the processing unit 30 with a plurality of images of a plant, wherein each image from the plurality of images of the plant was acquired from a different location and orientation relative to the plant. The processing unit 30 is configured to implement an image-based machine-learning algorithm to detect a disease and/or a pest on the plant. The processing unit 30 utilizes the plurality of images to detect a disease and/or pest on the plant with the image-based machine-learning algorithm.

In an example, a different location relative to the plant describes a spatial position from where an image is acquired which is different to the one where an image has been acquired before. The orientation of the image refers to the direction of the image which is always towards the plant independent of the location from where the image is acquired.

In an example, the image-based machine-learning algorithm is an artificial neural network, and preferably an artificial neural network with hidden layers for deep learning and more preferably a convolutional neuronal network (CNN). A CNN is a class of deep neural networks, most commonly applied to analyzing visual imagery. A CNN comprises an input layer with input neurons, an output layer with at least one output neuron, as well as multiple hidden layers between the input layer and the output layer. The hidden layers of a CNN typically consist of convolutional layers, ReLU (Rectified Linear Units) layer i.e. activation function, pooling layers, fully connected layers and normalization layers. The nodes in the CNN input layer are organized into a set of "filters" (feature detectors), and the output of each set of filters is propagated to nodes in successive layers of the network. The computations for a CNN include applying the convolution mathematical operation to each filter to produce the output of that filter. Convolution is a specialized kind of mathematical operation performed by two functions to produce a third function that is a modified version of one of the two original functions. In convolutional network terminology, the first function to the convolution can be referred to as the input, while the second function can be referred to as the convolution kernel. The output may be referred to as the feature map. For example, the input to a convolution layer can be a multidimensional array of data that defines the various color components of an input image. The convolution kernel can be a multidimensional array of parameters, where the parameters are adapted by the training process for the neural network. By analysis of the CNN, one can reveal patterns in the data which are not obvious and were used preferred (i.e., weighted more strongly) by the CNN while analyzing the training data.

In an example, at least one u-net deep learning segmentation algorithm and preferably at least two u-net deep learning segmentation algorithms are used. The u-network consists of a contracting path and an expansive path, which gives it the u-shaped architecture. The contracting path is a typical convolutional network that consists of repeated application of convolutions, each followed by a ReLU and a max pooling operation. During the contraction, the spatial information is reduced while feature information is increased. The expansive pathway combines the feature and spatial information through a sequence of up-convolutions and concatenations with high-resolution features from the contracting path. U-Net was created by Ronneberger et al. in 2015 at the paper "UNet: Convolutional Networks for Biomedical Image Segmentation"; arXiv: 1505.04597.

In an example, at least one u-net deep learning segmentation algorithm is trained to detect a plant leaf and at least one u-net deep learning segmentation algorithm is trained to detect a plant disease damaged and/or a pest infection region(s) on a plant leaf while the intersection of both output information is used to detect a plant disease and/or pest infection. In other words, only if a "damage" pixel is at the same position where a leaf-pixel has been detected with the other u-net deep learning segmentation algorithm a plant disease and/or pest infection is present.

In an example, the plant diseases (detectable on crops) are selected from the group of *Phaseolus vulgaris, Phakopsora pachyrhizi, Uromyces appendiculatus, Puccinia recondite, Alternaria brassicae, Alternaria solani, Pyrenophora teres, Septoria tritici, Phytophthora infestans, Plasmopara viticola, Botryotinia fuckeliana, Sphaerotheca fuliginea, Phaeosphaeria nodorum, Magnaporthe grisea, Gibberella zeae, Fusarium culmorum, Monographella nivalis, Erysiphe graminis, Podosphaera leucotricha, Corynespora cassiicola, Colletotrichum coccodes and Venturia inaequalis.*
In an example, the pests (detectable on crops) are selected from the group of beetles, bugs, aphids, flies, thrips, moths, butterflies, nematodes, slugs.

According to an example, a plurality of images of the plant were acquired from a side position preferably around the plant.

In an example, at least one image was acquired from a position above the plant and preferably substantially parallel to the surface of the ground.

In an example, the position above the plant describes a zenithal position relative to the plant. The orientation of the image is substantially parallel to the surface of the ground. Therefore, the orientation of the image relative to the plant in the zenithal position can be slightly rotated by an angle of rotation with respect to a horizontal axis, wherein the horizontal axis extends in parallel to the surface of the ground and above the plant.

In an example, the angle of rotation is between ± 20°, preferably ± 10°, more preferably between ± 5°.

In an example, an image acquired from a side position relative to the plant can be from below, at the same level or above the top of the stem of the plant and depends on the plant to be investigated. The orientation of the image relative to the plant is different depending on whether the image acquired from the side position below, at the same level or above the top of the stem of the plant.

According to an example, at least three images of the plant were acquired from a side position preferably around the plant and preferably in a substantially equal distance from each other.

In an example, the images are 2D images.

According to an example, the images of the plant from the side position of the plant were acquired substantially circularly around the plant.

In an example, three images are acquired circularly around the plant and the radial distance between each image is 120° ± 30° (polar grid in degrees), preferably 120° ± 15° more preferably 120° ± 5°.

According to an example, the plurality of images were acquired in a substantially equal distance from the plant.

In an example, the distance of an image to the plant is in the range of 1 cm to 5 m. The distance of an image to the plant can, as an example, is preferably in between 1 cm to 30 cm, more preferably in between 5 to 20 cm and even more preferably in the range of 8 to 15 cm.

According to an example, the apparatus further comprises:
- an output unit 40,
wherein the output unit is configured to output information about the plant disease status and/or pest infection status of the plant investigated.

In an example, the output unit comprises a visual display. The visual display is configured to display the plant disease status and/or the pest infection status of the plant investigated.

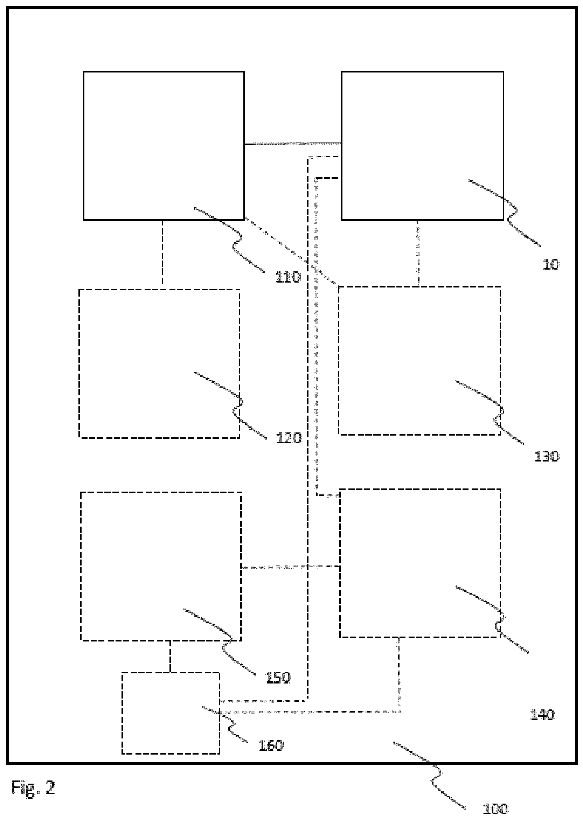

Fig. 2 shows an example of a system 100 for plant disease and/or pest detection. The system has a camera unit 110, an apparatus 10 for plant disease and/or pest detection as described above with reference to Fig. 1. The camera unit comprises at least one camera. The camera unit is configured to acquire the plurality of images of the plant.

In an example, the camera unit 110 is housed/attached to the apparatus 10. E.g. a land robot or unmanned aerial vehicle can comprise all elements of the system.

In an example, the plurality of images were acquired by a camera of a handheld device.

In an example, the plurality of images were acquired by a camera of a smart phone.

In an example, the camera unit is configured to provide the processing unit with at least one location associated with the at least one camera when the at least one image was acquired.

In an example, the location is an absolute geographical location.

In an example, a GPS unit is used to determine, and/or is used in determining, the location of the at least one camera when specific images were acquired.

In another example, an inertial navigation unit and/or a GPS unit is used to determine the location of the at least one camera when specific images were acquired. Thus for example, the inertial navigation unit, comprising for example one or more laser gyroscopes, is calibrated or zeroed at a known location and as it moves with the at least one camera the movement away from that known location in x, y, and z coordinates can be determined, from which the location of the at least one camera when images were acquired can be determined.

In an example, one camera is used and the output unit is configured to display information on the location where another image needs to be acquired based on the location information and/or the image content information of the first image acquired from the plant.

In an example, the plurality of images were acquired by a camera of an manned or unmanned aerial vehicle, such as robot or drone.

In an example, a plurality of images of the plant from different location and orientation relative to the plant can be acquired by moving the camera(s) of the camera unit while keeping the plant at a fixed position or by keeping the camera(s) of the camera unit at a fixed position and e.g. rotating the plant on a rotating table (in the laboratory).

According to an example, the system further comprises 100
- a frame 120 configured to hold the camera unit,
wherein the camera unit comprises at least four cameras and wherein at least three cameras are arranged on the frame relative to the plant at a side position around the plant and at least one camera is arranged on the frame above the plant and preferably substantially parallel to the surface of the ground.

In an example, the frame can e.g. be made of steel, plastics or fiber-reinforced plastics or any other material appropriate to hold the camera unit in its position.

In an example, the frame has at least one telescopic element to adjust the at least one camera on the side position relative to the plant in height.

In an example, the apparatus can be housed in/attached to the frame 120 as well. Alternatively, the apparatus is separate from the frame. Data communication occurs via wired or wireless links.

According to an example, at least one camera of the camera unit at the side position around the plant is configured to rotate by at least one angle of rotation with respect to a horizontal axis, wherein the horizontal axis extends in a tangential direction relative to the plant and wherein the horizontal axis further extends substantially parallel to the surface of the ground.

In an example, all cameras arranged at the side position around the plant are configured to rotate by at least one angle or rotation with respect to a horizontal axis.

In a further example, the at least one angle of rotation is between ± 45 °, preferably between ± 30 °, more preferably between ± 15 °.

In an example, at least one camera is arranged on the frame above the plant preferably substantially parallel to the surface of the ground. The position above the plant describes a zenithal position relative to the plant which means that the orientation of the camera towards the plant is from above the plants in the direction towards the ground.

In an example, the camera arranged at the zenithal position above the plant is configured to rotate by at least one angle or rotation with respect to a horizontal axis, wherein the horizontal axis extends in parallel to the surface of the ground and above the plant.

In an example, the angle of rotation is between ± 20°, preferably ± 10°, more preferably between ± 5°.

According to an example, the system for plant disease and/or pest detection further comprises
- at least one actuator 130 configured to move the at least one camera of the camera unit. The at least one camera of the camera unit is configured to acquire an image of a plant at a first location and orientation relative to the plant. The input unit is configured to provide the processing unit with the image acquired by the camera unit from the first location and orientation relative to the plant. The processing unit is configured to determine another location and orientation relative to the plant suitable for taking another image of the plant to detect a plant disease and/or a pest comprising utilization of the image content and spatial position information of the image from the first location and orientation relative to the plant. The processing unit is configured to control the at least one actuator to move the at least one camera of the camera unit to the new location and orientation relative to the plant as determined by the processing unit. The at least one camera of the camera unit is configured to acquire an image of the plant from the new location and orientation relative to the plant as determined by the processing unit.

In an example, the processing unit utilizes the image content and spatial position information of the image from the first location and orientation relative to the plant in order to assess another location and orientation relative to the plant for the acquisition of an image.

In an example, the assessment of another location and orientation relative to the plant for the acquisition of an image based on image content and spatial position of a first location and orientation relative to the plant can comprise (besides the spatial position) information selected from the group of the angle of the image acquired relative to the plant, the angle of the image acquired relative to a leaf or leaves shown on the image, the level of the disease and/or pest infection, the type of disease, the type of pest, overlap with other leaves, light reflections, environmental conditions such as wind, precipitation etc.

In an example, the at least one actuator 130 configured to move the at least one camera refers to a mechanical device that converts energy into motion. The source of energy may be, for example, an electric current, hydraulic fluid pressure, pneumatic pressure, mechanical energy, thermal energy, or magnetic energy. For example, an electric motor assembly may be a type of actuator that converts electric current into a rotary motion, and may further convert the rotary motion into a linear motion to execute movement. In this way, an actuator may include a motor, gear, linkage, wheel, screw, pump, piston, switch, servo, or other element for converting one form of energy into motion.

In an example, the at least one actuator can be part of a manned or unmanned aerial vehicle, such as robot or drone.

According to an example, the system for plant disease and/or pest detection further comprises:
- an output unit 140, and
- a spray gun 150 configured to spray a fungicide and/or an insecticide. The processing unit is further configured to determine if the plant is to be sprayed with a fungicide and/or an insecticide or is not to be sprayed with a fungicide and/or an insecticide based on the information relating to the plant. If the determination is made that the plant is to be sprayed with the fungicide and/or an insecticide, the output unit is configured to output information useable to activate at least one spray gun.

In an example, the system also comprises a liquid reservoir comprising a fungicide and/or an insecticide formulation which is in liquid connection to the spray gun.

In an example, a robotic land vehicle can move around a field and acquire imagery and determine if a detected plant disease and/or pest should be controlled or not, via for example a spray gun located on the robotic land vehicle or use a mechanical manipulator to control the plant disease and/or pest or not.

In an example, the system is operating in quasi real time, where images are acquired of a field and immediately processed to determine if detected plant disease and/or pest should be controlled or not. That information can later be used by the system (or systems) that travel(s) within the field and uses its plant disease and/or pest control technology to control at least some of the detected plant diseases and/or pest. Thus, for example, a first vehicle, such as a land robot equipped with one or more cameras can travel within a field and acquire imagery. This imagery can be immediately processed to detect plant diseases and/or pests and processing undertaken to determine which of those detected plant diseases and/or pests should be controlled, with the others being left alone. Thus, in effect a "plant disease and/or pest map", is generated detailing the location of plant diseases and/or pests that need to be controlled by a plant disease control technology. Later, a vehicle equipped with the plant disease and/or pest control technology can travel within the field and apply the disease and/or pest control technology to the plant disease that were previously determined to need to be controlled. Thus, for example, a land robot with a chemical spray gun then travels to the location of the plant disease and/or pest infection that need to be controlled and sprays the plants, or an unmanned aerial vehicle flies within the field and uses its chemical spray gun, applies the fungicide and/or insecticide to the plants that have been determined to require to be controlled.

In an example, the determination if a plant disease and/or pest shall be sprayed comprises application of at least one agronomic rule.

In an example, the processing unit is configured to analyse the plurality of images to determine a type of plant disease and/or pest that is present. The at least one agronomic rule comprises a list of at least one plant disease and/or pest that is to be controlled. Thus, the processing unit has a list of plant diseases and/or pests that should be controlled, which for example are particularly disruptive to the crop being grown in the field. If a plant disease and/or pest is detected that is one of those on the list, then it can be controlled (killed or destroyed or otherwise have means applied to it to disable or kill it).

In an example, the determination if a plant disease and/or pest shall be sprayed comprises the analysis of information selected from the group of the type of the disease, type of pest, infection level (severity) of the disease on the plant, infection level (severity) of pest infection, the distribution of the disease and/or pest infection on the plant, environmental conditions such as e.g. precipitation, wind etc.

According to an example, the system for plant disease and/or pest detection further comprises
- at least one actuator 160 configured to move the at least one spray gun. The processing unit is further configured to determine a location and orientation relative to the plant suitable for activating the at least one spray gun comprising utilization of the image content and spatial position information of the plurality of images of the plant. The processing unit is configured to control (directly or via the output unit 140) the at least one actuator 160 to move the at least one spray gun to the location and orientation relative to the plant as determined by the processing unit. The output unit is configured to output information useable to activate at least one spray gun at the location and orientation relative to the plant as determined by the processing unit based on the analysis of the of the image content and spatial position information of the plurality of images of the plant.

In an example, the determination of the location where the plant shall be sprayed comprises the analysis of information selected from the group of the type of the disease, type of pest, infection level (severity) of the disease and/or pest on the plant, the distribution of the disease and/or pest infection on the plant, overlap of leaves on the plant, environmental conditions such as e.g. precipitation, wind etc.

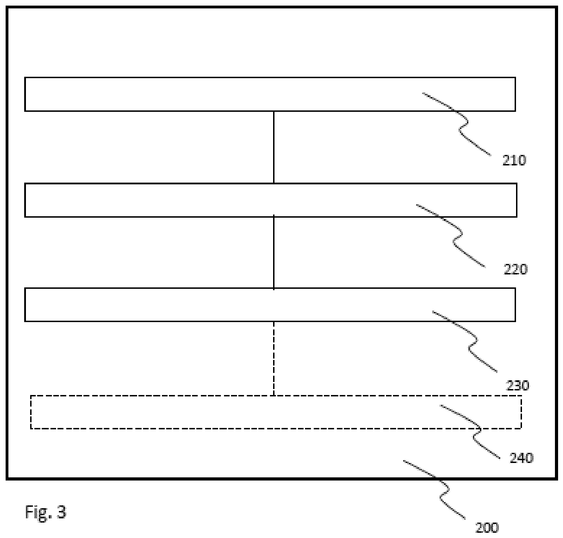

Fig. 3 shows a method 200 for plant disease and/or pest detection. The method comprises
in a providing step 210, also referred to as step a), providing a processing unit with a plurality of images of a plant; wherein each image from the plurality of images of the plant was acquired from a different location and orientation relative to the plant;
in an implementing step 220, also referred to as step b), implementing by the processing unit an image-based machine-learning algorithm to detect a disease and/or pest on the plant;
in a utilizing step 230, also referred to as step c), utilizing by the processing unit the plurality of images to detect a disease and/or pest on the plant with the image-based machine-learning algorithm.

In an example, in step a), providing a processing unit with a plurality of images of a plant; wherein at least one image was acquired from a position above the plant and preferably substantially parallel to the surface of the ground and wherein a plurality of other images of the plant were acquired from a side position preferably around the plant.

In an example, in step a), providing a processing unit with a plurality of images of a plant; wherein at least three images of the plant were acquired from a side position preferably around the plant and preferably in a substantially equal distance from each other.

In an example, in step a), providing a processing unit with a plurality of images of a plant; wherein at least three images of the plant were acquired from a side position preferably around the plant and preferably in a substantially equal distance from each other.

In an example, in step a), providing a processing unit with a plurality of images of a plant; wherein the images of the plant from the side position of the plant were acquired substantially circularly around the plant.

In an example, in step a), providing a processing unit with a plurality of images of a plant; wherein the plurality of images were acquired in a substantially equal distance from the plant.

In an example, the method comprises step d), the outputting 240 by an output unit an information about the plant disease and/or pest infection status of the plant investigated.

In an example, the plurality of images of a plant were acquired by a camera unit comprising at least one camera.

In an example, a frame holds the camera unit and the camera unit comprises at least four cameras and wherein at least three cameras are arranged on the frame relative to the plant at a side position around the plant and at least one camera is arranged on the frame above the plant and preferably substantially parallel to the surface of the ground.

In an example, at least one camera of the camera unit at the side position around the plant can rotate by at least one angle of rotation with respect to a horizontal axis, wherein the horizontal axis extends in a tangential direction relative to the plant and wherein the horizontal axis further extends substantially parallel to the surface of the ground.

In an example, at least one actuator moves the at least one camera of the camera unit, wherein the at least one camera of the camera unit acquires an image of a plant at a first location and orientation relative to the plant; wherein the input unit provides the processing unit with the image acquired by the camera unit from the first location and orientation relative to the plant, wherein the processing unit determines another location and orientation relative to the plant suitable for taking another image of the plant to detect a plant disease and/or pest comprising utilization of the image content and spatial position information of the image from the first location and orientation relative to the plant, wherein the processing unit controls the at least one actuator to move the at least one camera of the camera unit to the new location and orientation relative to the plant as determined by the processing unit, and
wherein the at least one camera of the camera unit acquires an image of the plant from the new location and orientation relative to the plant as determined by the processing unit.

In an example, the processing unit determines if the plant is to be sprayed with a fungicide and/or an insecticide or is not to be sprayed with a fungicide and/or an insecticide based on the information relating to the plant; and wherein, if the determination is made that the plant is to be sprayed with the fungicide and/or an insecticide, the output unit outputs information useable to activate at least one spray gun.

In an example, the processing unit determines a location and orientation relative to the plant suitable for activating the at least one spray gun comprising utilization of the image content and spatial position information of the plurality of images of the plant; wherein the processing unit controls the at least one actuator to move the at least one spray gun to the location and orientation relative to the plant as determined by the processing unit, wherein the output unit outputs information useable to activate at least one spray gun at the location and orientation relative to the plant as determined by the processing unit based on the analysis of the of the image content and spatial position information of the plurality of images of the plant.

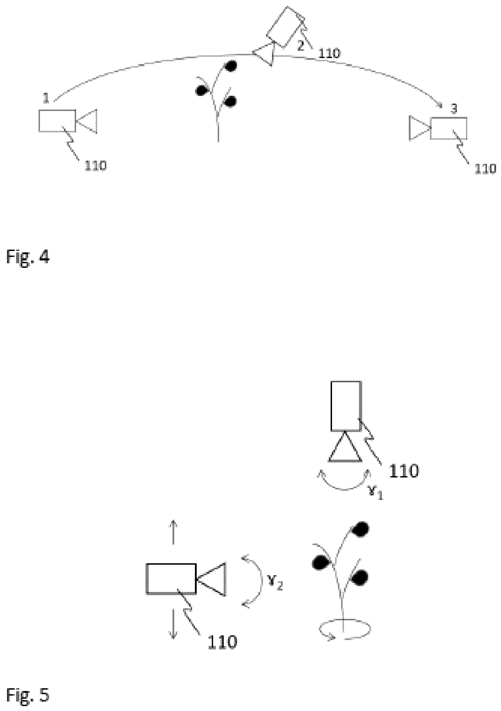

Fig. 4 shows an example of a system with one camera from a side view perspective. The system comprises an actuator 130 (now shown) to move the system comprising the apparatus 10 with the input unit 20 and the processing unit 30 (not shown) and the camera unit 110 with the one camera from position 1 to position 2 and then to position 3. Alternatively, the apparatus 10 is physically disconnected from the camera unit 110 and the communication between these two occurs via wireless links. All positions (locations) in the figure are characterized by camera positions (1, 2 and 3) having different location and orientation relative to the plant. The plant is schematically illustrated in the center of the figure. The movement from position 1 to 2 and then to position 3 is either based on spatial information (e.g. from the position 1 and its distance to the plant) alone. Alternatively, further image content information is analyzed by the processing unit and used together with the spatial information of position 1 in order to determine the position 2. In addition, the image content information at position 2 (and position 1) is used together with the spatial information of position 2 (and position 1) in order to determine the position 3.

Fig. 5 shows an example of a system with a camera unit 110 comprising two cameras from a side view perspective. One camera is located at a zenithal position (above the plant and substantially parallel to the surface of the ground) relative to the plant. The orientation of the image relative to the plant in the zenithal position can be slightly rotated by an angle of rotation with respect to a horizontal axis, wherein the horizontal axis extends in parallel to the surface of the ground and above the plant. The angle of rotation is indicated in Fig. 5 with γ1. γ1 can be between ± 20°. In Fig. 5 the angle of rotation for γ1 is 0°. The second camera is located at a side position relative to the plant. This camera can rotate by at least one angle of rotation with respect to a horizontal axis, wherein the horizontal axis extends in a tangential direction relative to the plant and wherein the horizontal axis further extends substantially parallel to the surface of the ground. This angle of rotation is indicated in Fig. 5 with γ2. γ2 can be between ± 45°. In Fig. 5 the angle of rotation for γ2 is 0°. The plant is schematically illustrated in the center of the figure. In this example, the plant can be rotated by 360° on a rotating table in order to acquire a plurality of images from the side position of the plant at various locations and orientations around the plant. The apparatus 10 is not shown but can be part of the camera unit 110 or physically disconnected from the camera unit. The cameras can be connected or physically disconnected from each other. Data communication can occur wired or wireless.

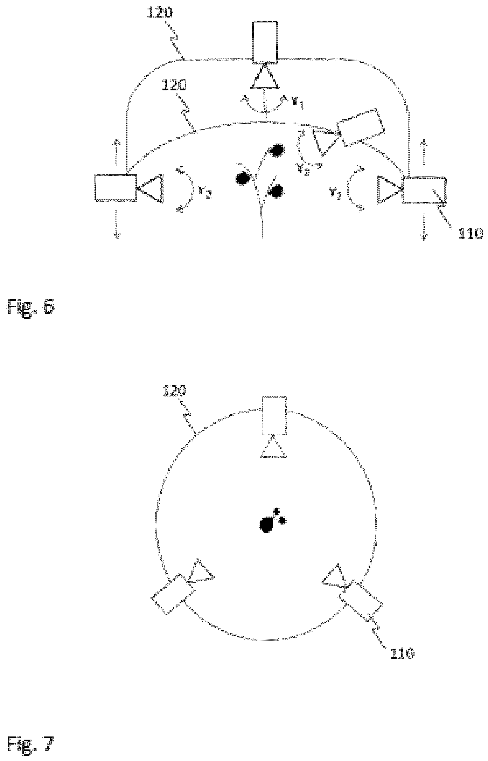

Fig. 6 shows an example of a system with a camera unit 110 comprising four cameras from a side view perspective. The plant is schematically illustrated in the center of the figure. Three cameras on a side position relative to the plant are shown. In addition, one camera is at the zenithal position above the plant. The cameras are connected via a frame 120. As already discussed in Fig. 5. the cameras on the side position relative to the plant can rotate by at least one angle of rotation with respect to a horizontal axis, wherein the horizontal axis extends in a tangential direction relative to the plant and wherein the horizontal axis further extends substantially parallel to the surface of the ground. This angle of rotation is indicated in Fig. 6 with γ2. γ2 can be for each camera between ± 45°. In Fig. 5 the angle of rotation for γ2 is in each case 0°. In addition, the side cameras can also be adjusted on height relative to the plant. They can be below, at the same level or above the top of the stem of the plant (as indicated with the arrows). This can e.g. be achieved with a telescopic frame 120. Also the camera above the plant can be slightly rotated by an angle of rotation with respect to a horizontal axis, wherein the horizontal axis extends in parallel to the surface of the ground and above the plant. The angle of rotation is indicated in Fig. 6 with γ1. γ1 can be between ± 20°. In Fig. 6 the angle of rotation for γ1 is 0°. The apparatus 10 is not shown but can be part of the camera unit 110 or physically disconnected from the camera unit. Data communication can occur wired or wireless.

Fig. 7 shows an example of a system with a camera unit 110 comprising four cameras from a top view perspective (similar system as the one described in Fig. 6). The plant is schematically illustrated in the center of the figure. The three cameras at the side position relative to the plant are connected to a frame 120 and are arranged substantially circularly around the plant. The circular distance between the cameras is 120° (± 30°). The zenithal camera and the apparatus 10 are not shown.

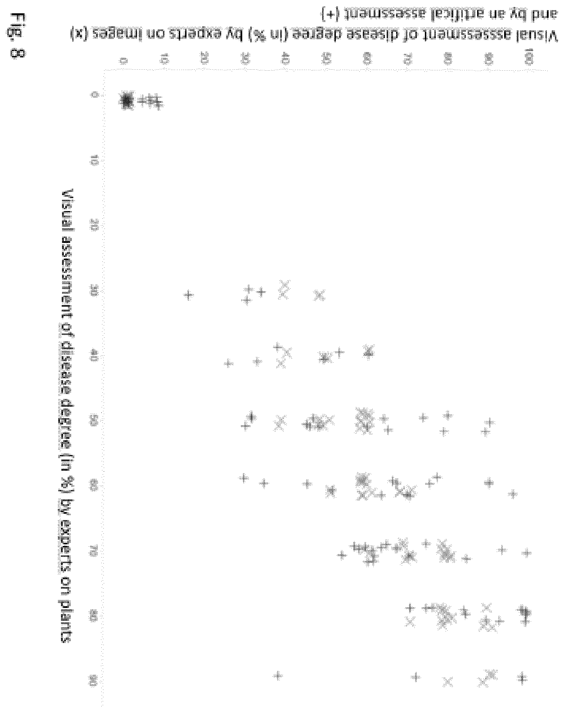

Fig. 8 shows a comparison of a plant disease assessment between a visual assessment by an expert (on the plant and with images of the plants) in comparison to an assessment with the herein described apparatus and system. Images of 241 individual bean plants (*Phaseolus vulgaris*) have been acquired that are infected to various degrees with bean rust (*Uromyces fabae*)*.* Four images have been acquired with a system as described in Fig. 6 and Fig. 7 for each plant (three from a side view and one zenithal view). Images of 152 plants have been taken as a training set for the CNN. 89 plants been used for the assessment as shown in figure 8. First, the disease degree (in %) directly on the plants has been visually assessed by experts and plants with a certain disease degree have been grouped along the x-axis (in 10% disease rating steps with 0% corresponding to no signs of bean rust and 90% corresponding to severe signs of bean rust). The four images corresponding to a certain plant have then again been visually assessed (randomized and anonymized) by experts in order to assign a disease degree to a plant (similar rating steps) and the result of this assessment is depicted in Fig. 8 (symbol "x"). E.g. four plants have been rated to have a 30% disease infection (x-axis). Based on the visual image analysis by experts only, two of these four plants (symbol "x") have been rated as to have a 50% disease infection (y-axis) and two of these four plants (symbol "x") have been rated to have a 40% disease infection. The y-axis in Fig. 8 shows the disease degree in % as assessed by experts based on images and as artificially assessed (in 10% disease rating steps with 0% corresponding to no signs of bean rust and 100% corresponding to severe signs of bean rust).
The artificial assessment with the herein described apparatus and system has been done by using a CNN with two u-net deep learning segmentation algorithms. One u-net was trained to detect a plant leaf and another u-net deep learning segmentation algorithm was trained to detect plant disease damaged regions on a plant leaf. For the training the images of 152 bean plants (each with 4 images) have been used. The intersection of both output information is used to detect a plant disease. In other words, only if a "damage" pixel is at the same position where a leaf-pixel has been detected with the other u-net deep learning segmentation algorithm a plant disease is present. Based on four images for each of the individual bean plant of the test set (89 plants overall) the median from individual measurement points (pixel diseased/pixel leave) has been assessed and the corresponding disease degree has been calculated (symbol "+" in Figure 8). A cut off was used to remove from the calculation all images where very few pixels considered as a leaf where detected (less than 10% of "leave" pixels in an image compared to the average "leave" pixel for one image in the data set). As shown in Fig. 8, the artificial assessment (symbol "+") is similar to the visual assessment by experts on images (symbol "x") and leads in most cases to similar results as those that are visually assessed by experts on the plants directly (x-axis).

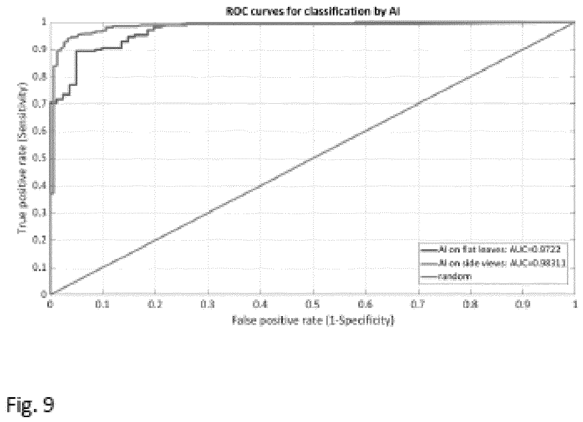

Fig. 9 shows a receiver operating characteristic curve (ROC curve) of the CNN with two u-net deep learning segmentation algorithms as discussed in Fig. 8. Artificial disease detection on images from a side view position of a plant (AI on side views) and images from a zenithal view relative to the plant (AI on flat leaves) lead to results with high prediction power. Surprisingly artificial assessment on images acquired from a side view position relative to the plant seems to even outperform the artificial assessment of images acquired from a zenithal position relative to the plant.

In another exemplary embodiment, a computer program or computer program element is provided that is characterized by being configured to execute the method steps of the method according to one of the preceding embodiments, on an appropriate system.
The computer program element might therefore be stored on a computer unit, which might also be part of an embodiment. This computing unit may be configured to perform or induce performing of the steps of the method described above. Moreover, it may be configured to operate the components of the above described apparatus and/or system. The computing unit can be configured to operate automatically and/or to execute the orders of a user. A computer program may be loaded into a working memory of a data processor. The data processor may thus be equipped to carry out the method according to one of the preceding embodiments. This exemplary embodiment of the invention covers both, a computer program that right from the beginning uses the invention and computer program that by means of an update turns an existing program into a program that uses invention.
Further on, the computer program element might be able to provide all necessary steps to fulfill the procedure of an exemplary embodiment of the method as described above.

According to a further exemplary embodiment of the present invention, a computer readable medium, such as a CD-ROM, USB stick or the like, is presented wherein the computer readable medium has a computer program element stored on it which computer program element is described by the preceding section.
A computer program may be stored and/or distributed on a suitable medium, such as an optical storage medium or a solid state medium supplied together with or as part of other hardware, but may also be distributed in other forms, such as via the internet or other wired or wireless telecommunication systems.
However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the apparatus or system type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. An apparatus (10) for plant disease and/or pest detection, comprising:
- an input unit (20), and
- a processing unit (30),
wherein, the input unit is configured to provide the processing unit with a plurality of images of a plant, wherein each image from the plurality of images of the plant was acquired from a different location and orientation relative to the plant;
wherein the processing unit is configured to implement an image-based machine-learning algorithm to detect a disease and/or a pest on the plant;
wherein the processing unit utilizes the plurality of images to detect a disease and/or a pest on the plant with the image-based machine-learning algorithm.

2. Apparatus for plant disease and/or pest detection according to claim 1, wherein a plurality of images of the plant were acquired from a side position preferably around the plant and wherein preferably at least one image was acquired from a position above the plant and preferably substantially parallel to the surface of the ground.

3. Apparatus for plant disease and/or pest detection according to claim 2, wherein at least three images of the plant were acquired from a side position preferably around the plant and preferably in a substantially equal distance from each other.

4. Apparatus for plant disease and/or pest detection according to claim 2 to 3 wherein the images of the plant from the side position of the plant were acquired substantially circularly around the plant.

5. Apparatus for plant disease and/or pest detection according to any one of the preceding claims wherein the plurality of images were acquired in a substantially equal distance from the plant.

6. Apparatus for plant disease and/or pest detection according to any one of the preceding claims wherein the apparatus further comprises:
- an output unit (40),
wherein the output unit is configured to output information about the plant disease status of the plant investigated.

7. A system (100) for plant disease and/or pest detection, comprising:
- a camera unit (110),
- an apparatus (10) for plant disease and/or pest detection according to any one of the preceding claims,
wherein the camera unit comprises at least one camera, and
wherein the camera unit is configured to acquire the plurality of images of the plant.

8. System for plant disease and/or pest detection according to claim 7, wherein, the system further comprises
- a frame (120) configured to hold the camera unit, wherein the camera unit comprises at least four cameras and wherein at least three cameras are arranged on the frame relative to the plant at a side position around the plant and at least one camera is arranged on the frame above the plant and preferably substantially parallel to the surface of the ground.

9. System for plant disease and/or pest detection according to claim 8, wherein at least one camera of the camera unit at the side position around the plant is configured to rotate by at least one angle of rotation with respect to a horizontal axis, wherein the horizontal axis extends in a tangential direction relative to the plant and wherein the horizontal axis further extends substantially parallel to the surface of the ground.

10. System for plant disease and/or pest detection according to claim 7, further comprising
- at least one actuator (130) configured to move the at least one camera of the camera unit,
wherein the at least one camera of the camera unit is configured to acquire an image of a plant at a first location and orientation relative to the plant;
wherein the input unit is configured to provide the processing unit with the image acquired by the camera unit from the first location and orientation relative to the plant,
wherein the processing unit is configured to determine another location and orientation relative to the plant suitable for taking another image of the plant to detect a plant disease and/or pest comprising utilization of the image content and spatial position information of the image from the first location and orientation relative to the plant,
wherein the processing unit is configured to control the at least one actuator to move the at least one camera of the camera unit to the new location and orientation relative to the plant as determined by the processing unit, and
wherein the at least one camera of the camera unit is configured to acquire an image of the plant from the new location and orientation relative to the plant as determined by the processing unit.

11. System for plant disease and/or pest detection according to any one of the previous claims, further comprising:
- an output unit (140),
- a spray gun (150) configured to spray a fungicide and/or an insecticide,
wherein the processing unit is further configured to determine if the plant is to be sprayed with a fungicide and/or an insecticide or is not to be sprayed with a fungicide and/or an insecticide based on the information relating to the plant; and
wherein, if the determination is made that the plant is to be sprayed with the fungicide and/or an insecticide, the output unit is configured to output information useable to activate at least one spray gun.

12. System for plant disease and/or pest detection according to claim 11, further comprising
- at least one actuator (160) configured to move the at least one a spray gun,
wherein the processing unit is further configured to determine a location and orientation relative to the plant suitable for activating the at least one spray gun comprising utilization of the image content and spatial position information of the plurality of images of the plant;
wherein the processing unit is configured to control the at least one actuator to move the at least one spray gun to the location and orientation relative to the plant as determined by the processing unit,
wherein the output unit is configured to output information useable to activate at least one spray gun at the location and orientation relative to the plant as determined by the processing unit based on the analysis of the of the image content and spatial position information of the plurality of images of the plant.

13. A method (200) for plant disease and/or pest detection, comprising
(a) providing (210) a processing unit with a plurality of images of a plant; wherein each image from the plurality of images of the plant was acquired from a different location and orientation relative to the plant;
(b) implementing (220) by the processing unit an image-based machine-learning algorithm to detect a disease and/or a pest on the plant;
(c) utilizing (230) by the processing unit the plurality of images to detect a disease and/or a pest on the plant with the image-based machine-learning algorithm.

14. A computer program element for controlling an apparatus according to any of claims 1 to 6 and/or system according to any of claims 7 to 12, which when executed by a processor is configured to carry out the method of claim 13.

15. A computer readable medium having stored the program element of claim 14.
